# EUROPEAN PATENT SPECIFICATION

(11) **EP 4 484 686 B1**
(45) Date of publication and mention of the grant of the patent: **30.07.2025**
(21) Application number: 23182465.7
(22) Date of filing: 29.06.2023
(51) Int. Cl.: E05B 63/20, E05C 1/06, F16P 1/00

(54) **A DOOR HANDLE SYSTEM FOR A SAFETY DOOR, ESPECIALLY FOR A SLIDING DOOR OR SWING DOOR**
TÜRGRIFFSYSTEM FÜR EINE SICHERHEITSTÜR, INSBESONDERE FÜR EINE SCHIEBETÜR ODER EINE SCHWENKTÜR
SYSTÈME DE POIGNÉE DE PORTE POUR UNE PORTE DE SÉCURITÉ, EN PARTICULIER POUR UNE PORTE COULISSANTE OU UNE PORTE PIVOTANTE

(43) Date of publication of application: 01.01.2025
(73) Proprietor: SICK AG, 79183 Waldkirch (DE)
(72) Inventor: PLARIZA, Julio Sandino, 6045 Talisay City, Cebu (PH); SAYCON, Omar, 6018 San Fernando, Cebu (PH); LIEW, Sheau Shiang, 79100 Iskandar Puteri, Johor (MY); FU, Mao Ai, 730009 Singapore (SG)
(74) Representative: Manitz Finsterwald Patent- und Rechtsanwaltspartnerschaft mbB

(56) References cited:
- DE-C- 533 212
- FR-A- 1 286 097
- GB-A- 2 131 078
- GB-A- 322 195
- GB-A- 335 350
- US-A1- 2015 292 245

## Description

The invention describes a door handle system for a safety door, especially for a sliding door or swing door.

Door handle systems are used almost in every door. In the simplest form they comprise a movable bolt and a lock in which the bolt can engage. Depending on the needs, door handle systems may also comprise various electronic components which can be used to control different devices. Such door handle systems can therefore be used as safety doors and shut down devices, like robots, if the door is opened to avoid injuries.

A door handle system also has lot of user interaction. Current door handles in the market requires the user to manually rotate when opening, to retract the bolt, and when closing, to extend the bolt. Also, the handle orientation is different when the bolt is in its extended and retracted position. In addition, there are additional adjustments needed when the user needs to mount the handle from left to right door hinged installations, and vice versa. Other products also have dedicated door handle variants for left and right door hinged installations.

GB 322 195 A describes a door handle system. The door handle system can be operated by a handle from one side of the door and by a key from the other side of the door. The bolt of the door handle system is also configured to automatically extend and lock the door as it closes. This is facilitated by a spring-pressed lever mechanism designed to retain the bolt in a retracted position when the door is open. As the door closes, the lever interacts with a fixed part on the door frame, which releases the bolt. Consequently, the bolt is pushed forward by springs into the locked position as soon as the door reaches the closed position.

GB 2 131 078 A outlines a bolt retaining device configured to prevent the extension of a door's bolt into its locking position when the door is open, safeguarding against damage to both the doorframe and the bolt mechanism. The bolt retaining device features a bolt blocking plate maneuvered by a hinge operator and a biasing spring, ensuring the bolt remains retracted while the door is open. Upon closing, the bolt extends into its locking position automatically.

US 2015/292245 A1 describes a deadbolt lock system designed for enhancing security in areas requiring controlled access. The system includes a housing with a deadbolt capable of moving between extended and retracted positions, controlled by slider and lock mechanisms that facilitate or prevent bolt movement based on security requirements. The system also integrates an escape lever allowing bolt retraction from inside, regardless of other lock states, and includes a deadbolt hold back mechanism to prevent extension when the door is open, automatically extending the deadbolt when the door is closed.

FR 1 286 097 A2 describes a lock system that features a unique bolt that remains retracted while the door is open and automatically unlocks as the door is fully closed.

GB 335 350 A describes a door lock system which comprises a bolt that extends automatically when the door is closed. This automatic extension is triggered by the door's movement against a striker-plate, which slightly retracts the bolt, allowing the catch to move and release the bolt fully into engagement under the force of a spring.

DE 533 212 C describes a lock designed for situations where the retracted latch automatically locks in an inactive position and is released only when a part of the release mechanism encounters the door's strike plate as the door closes.

The object of the present invention therefore is to improve the current door handle design in such a way that it overcomes the known problems and that it is more durable compared to current installations.

The object is solved by the door handle system according to the independent claim 1. The dependent claims show preferred embodiments of the door handle system.

The door handle system according to the present invention can be used for a safety door, especially for a sliding door or swing door. The door handle system comprises a bolt unit. The bolt unit comprises a housing with a bolt opening. The bolt unit also comprises a handle. The handle is arranged (attached to) at the housing. The bolt unit also comprises a bolt module with a bolt. The bolt is movable respective to the housing. The bolt can be moved (pushed) out of the bolt opening for engaging with a corresponding lock opening of a lock unit. The bolt unit also comprises a restraining device with a bolt stopper. The bolt stopper is configured to be switched (i.e. moved) between a blocking position in which it engages with the bolt and a release position in which it releases the bolt thereby allowing the bolt to move out of the bolt opening. Preferably, the bolt is fully or predominantly arranged within the housing if the bolt stopper is in the blocking position. The door handle system also comprises an activation means, wherein the bolt stopper is configured to get in contact with the activation means in a closed state of the safety door thereby switching (i.e. moving the bolt stopper) to the release position.

It is very beneficial that the bolt only moves out of the bolt opening if the bolt stopper is in the release position. As such, the bolt is protected and cannot be damaged by closing the (swing) door. Furthermore, the use of the activation means is also very beneficial, because the only thing the user has to do is closing the door in order to make sure that the bolt is being pushed out of the bolt opening and engages with the lock unit.

In a preferred embodiment of the invention, the bolt stopper is configured to prevent the bolt from moving out of the bolt opening if the bolt stopper is in the blocking position. This is preferably done by blocking a part or most of the bolt opening of the housing while the bolt is retracted (located in) into the housing.

In a preferred embodiment of the invention, the door handle system comprises a lock unit, wherein the lock unit comprises a lock housing with the lock opening and wherein the lock unit comprises the activation means.

In a preferred embodiment of the invention, the lock unit is configured to be arranged stationary and the bolt unit is configured to be arranged on the movable safety door. Alternatively, the bolt unit is configured to be arranged stationary and the lock unit is configured to be arranged on the movable safety door.

In a preferred embodiment of the invention, the lock housing and the activation means are made of a single piece. They could comprise or consist of metal or plastic.

In a preferred embodiment of the invention, the activation means comprises a protrusion configured to get into contact with the bolt stopper if the safety door is in a closed position, thereby displacing (moving) the bolt stopper so that the bolt stopper switches to the release position.

In a preferred embodiment of the invention, the bolt stopper is a frame surrounding an opening, wherein the opening of the frame aligns with the bolt opening of the housing if the bolt stopper is the release position, thereby allowing the bolt to move through the opening of the frame and out of the bolt opening of the housing.

In a preferred embodiment of the invention, the frame has a cross section in form of a rectangle or a square. The cross section can also be oval or circular.

In a preferred embodiment of the invention, the frame is fully closed, except for the opening, thereby surrounding bolt in the release position. However, the frame could also comprise interruptions in its frame structure.

In a preferred embodiment of the invention, the bolt stopper rests on the front side of the bolt or on a shoulder of the bolt if the bolt stopper is in the blocking position. If it rests on the front site of the bolt, then the bolt is protected by the bolt stopper while the bolt stopper is in the blocking position.

In a preferred embodiment of the invention, the bolt stopper is in the blocking position while the safety door is opened. Contrary to that, the bolt stopper is in the release position while the safety door is closed.

In a preferred embodiment of the invention, the bolt is invisible during operation of the safety door. If the safety door is opened, the bolt is arranged inside the housing of the bolt unit and shielded by the bolt stopper. If the safety door is closed, the bolt is arranged within the lock opening of the lock unit and shielded by the lock housing. Therefore, damages to the bolt are unlikely.

In a preferred embodiment of the invention, the restraining device comprises a restraining spring, wherein the restraining spring is configured to engage with the bolt stopper in such a way that the bolt stopper rests in the blocking position until it gets in contact with the activation means. Therefore, vibrations applied to the safety door, for example from moving the safety door, would not result in the bolt stopper switching from the blocking position to the release position before the safety door is in its closed position. In addition, the restraining spring is configured to engage with the bolt stopper in such a way that the bolt stopper switches from the release position into the blocking position after the bolt is retracted back into the bolt opening of the housing of the bolt unit and especially behind the bolt stopper. Normally, the bolt is retracted back upon opening the safety door, for example by pressing the handle downwards or upwards. It is very beneficial that the restraining spring permanently applies a closing force on the bolt stopper so that the bolt stopper closes the bolt opening of the housing as soon as the bolt is behind the bolt stopper or as soon as the shoulder of the bolt is behind the bolt stopper. Therefore, the time the bolt is exposed to the surrounding is kept to a minimum. In addition, the activation means must apply a force greater than the closing force of the restraining spring to the bolt stopper in order to switch it from the blocking position into the release position. This force can easily be applied upon closing the safety door.

In a preferred embodiment of the invention, the bolt stopper is configured to seal the housing of the bolt unit. Preferably, the bolt stopper comprises a sealing element like a rubber sealing or a brush-like sealing. Using a sealing, impurities like water droplets or dust particles can be kept outside the housing of the bolt unit.

According to the invention, the bolt module comprises a body portion, wherein the bolt is forming a first end of the body portion. The bolt unit further comprises a spring, wherein the spring is configured to apply a force on the body portion in the direction of the bolt opening of the housing. Depending on the arrangement of the spring, the spring pulls or pushes the body portion towards the bolt opening. If the bolt stopper is in the release position, then the force of the spring pushes the bolt out of the bolt opening. The bolt and the body portion can be made of a single piece or of separate pieces. The body portion can also be made of separate pieces.

In a preferred embodiment of the invention, a first end of the spring is attached at the body portion of the bolt module and a second end of the spring is attached at the housing of the bolt unit in a region of the bolt opening or at the restraining device. In these cases, the spring is configured to pull the body portion of the bolt module towards the bolt opening of the housing. Of course, more than one spring can be used for that purpose.

In a preferred embodiment of the invention, the spring is a spiral spring. More preferably, the spring is made of steel, especially stainless steel.

According to the invention, the housing of the bolt unit comprises a fastening opening opposite to the bolt opening. The body portion comprises a fastening part forming a second end of the body portion opposite to the first end. The fastening part is configured to protrude out of the fastening opening of the housing if the bolt stopper is in the blocking position. In addition, the fastening part is arranged within the housing if the bolt stopper is in the release position. The fastening part is configured to engage with a fastening mean thereby limiting the movement of the bolt respective to the housing. It is very beneficial that an additional fastening part is present. An operator who wants to go into a sealed environment (for example a cage in which a robot operates) can indicate his presents in the sealed environment by attaching a personal lock (for example a U-Bolt lock) to the fastening part. In return, the bolt will not move out of the bolt opening, because the movement is limited by the fastening mean attached by the operator since the fastening mean cannot be moved into the housing through the fastening opening. As such, even if the bolt stopper engages with the activation mean, the bolt stopper cannot switch from the blocking position into the release position. Therefore, the door handle system would not be able to transmit a status signal indicating that the safety door is successfully closed thereby allowing a machinery inside the sealed environment to start up.

In a preferred embodiment of the invention, the housing of the bolt unit comprises a second opening which is arranged opposite to the bolt opening. The bolt module is arrangeable within the housing such that the bolt can be moved out of the second opening instead of the bolt opening which allows the door handle system to be applied to a safety door that opens to the right as well as to a safety door that opens to the left. The second opening can of course be the fastening opening as described in the previous paragraph. Having two similar openings, the installation of the door handle system is simplified.

In a preferred embodiment of the invention, the handle comprises at least one cam or one finger which is configured to get into contact with the bolt module if the handle is pressed. By pressing the handle upwards or downwards, it therefore moves from a first position which can also be called neutral position into a second position. The at least on cam or the at least one finger also rotates as the handle does. By this rotation, the at least one cam or the at least one finger is configured to push the bolt module away from the bolt opening of the housing so that the bolt is moved back into the bolt opening of the housing. As a result, the bolt stopper switches from the release position into the blocking position as soon as the handle is rotated into the second position.

In a preferred embodiment of the invention, the bolt body and therefore the bolt is configured to move along one axis only.

In a preferred embodiment of the invention, a return spring is provided and attached to the handle and the housing. The return spring is configured to move the handle back from second position into the first position. Of course, this is only done if the handle is not pressed (for example upwards or downwards) anymore. In that case, the at least one cam or the at least one finger does not engage with the bolt module anymore. If the activation means engages with the bolt stopper (when closing the safety door), then the bolt stopper immediately switches into the release position. The spring attached to the bolt module therefore pulls the bolt module towards to bolt opening.

In a preferred embodiment of the invention, the return spring is only arranged within the housing of the bolt unit and therefore preferably invisible from the outside of the housing.

In a preferred embodiment of the invention, the restraining spring of the restraining device comprises a first end and a second end, wherein the first end engages with the bolt stopper and the second end engages with the housing of the bolt unit.

In a preferred embodiment of the invention, the activation means is configured to move the bolt stopper against the force of the restraining spring from the blocking position into the release position upon closing of the safety door.

In a preferred embodiment of the invention, the bolt stopper is configured to be moved along one axis.

In a preferred embodiment of the invention, the axis along which the bolt stopper is moveable is arranged perpendicular to the axis along which the bolt is moveable.

In a preferred embodiment of the invention, the bolt stopper is configured to be moved towards a side of the housing of the bolt unit at which the handle is arranged. Alternatively, the bolt stopper is configured to be moved towards a side of the housing of the bolt unit which is opposite to the side of the housing of the bolt unit at which the handle is arranged.

In a preferred embodiment of the invention, the bolt stopper is arranged within the housing of the bolt unit or within a housing module of the restraining device.

In a preferred embodiment of the invention, the bolt stopper is movable with regard to the housing of the bolt unit. However, the bolt stopper is preferably only moveable in one axis with regards to the housing of the bolt unit.

In a preferred embodiment of the invention, the bolt stopper is arranged within a recess of the housing of the bolt unit.

Different embodiments of the invention will be described in the following, by way of example and with reference to the drawings. The same elements are provided with the same reference signs. The figures show in detail:
- Figure 1:: an installation of the door handle system according to the present invention at a safety door in form of a swing door and a sliding door;
- Figures 2A, 2B:: a door handle system installed at a sliding door with a bolt unit and a lock unit;
- Figure 3:: a door handle system with a bolt unit, wherein the bolt is arranged within a housing bolt unit, wherein a bolt stopper is in a blocking position;
- Figure 4:: the embodiment of figure 3, wherein the bolt stopper is in a release position so that the bolt is pushed out of a bolt opening of the housing;
- Figure 5:: the embodiment of figure 3, wherein an activation means is shown that can be engaged with the bolt stopper;
- Figure 6:: the embodiment of figure 3, wherein the activation means engages with the bolt stopper so that the bolt stopper switches from the blocking position into the release position;
- Figure 7:: an embodiment that describes how the bolt is retracted into the housing of the bolt unit upon pressing the handle; and
- Figure 8:: an embodiment that describes that the door handle system can also operate on a safety door that opens to the left.

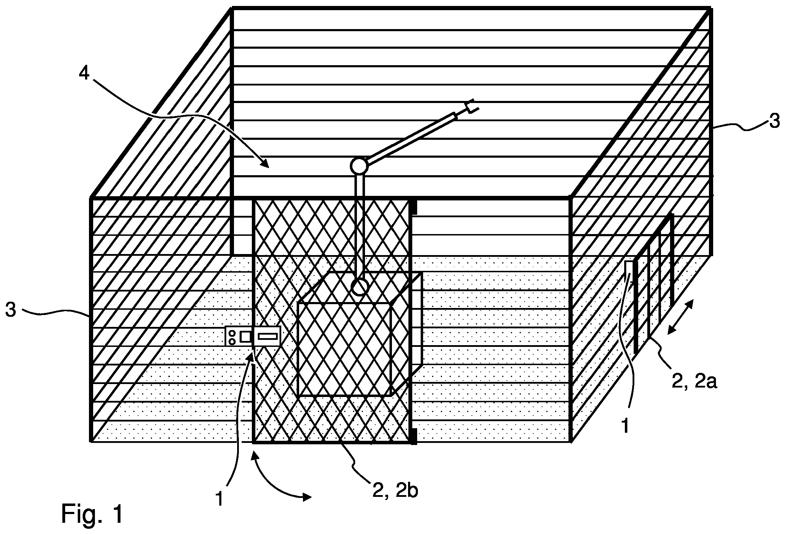

Figure 1 shows a door handle system 1 for a safety door 2, especially for a sliding door 2a or swing door 2b. Furthermore, a cage 3 is shown enclosing a sealed environment 4 in which a machine, for example in form of a robot, is operating. Upon opening the safety door 2, the door handle system 1 is preferably configured to transmit a status update so that the machine within the sealed environment 4 stops. This status update could be transmitted directly to the machine or indirectly via a central processing unit (not shown), which in turn turns off the machine. Upon closing the safety door 2, the door handle system 1 is preferably configured to transmit another status update so that the machine arranged within the sealed environment 4 resumes operation.

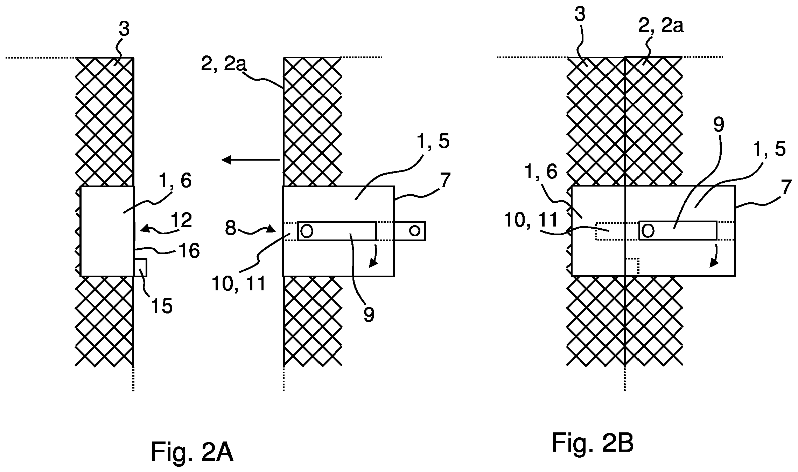

Figures 2A and 2B show an embodiment of the door handle system 1 arranged on a door 2 in form of a sliding door 2a. In Figure 2A the sliding door 2a is at least partly open, wherein in Figure 2B the sliding door 2a is closed.

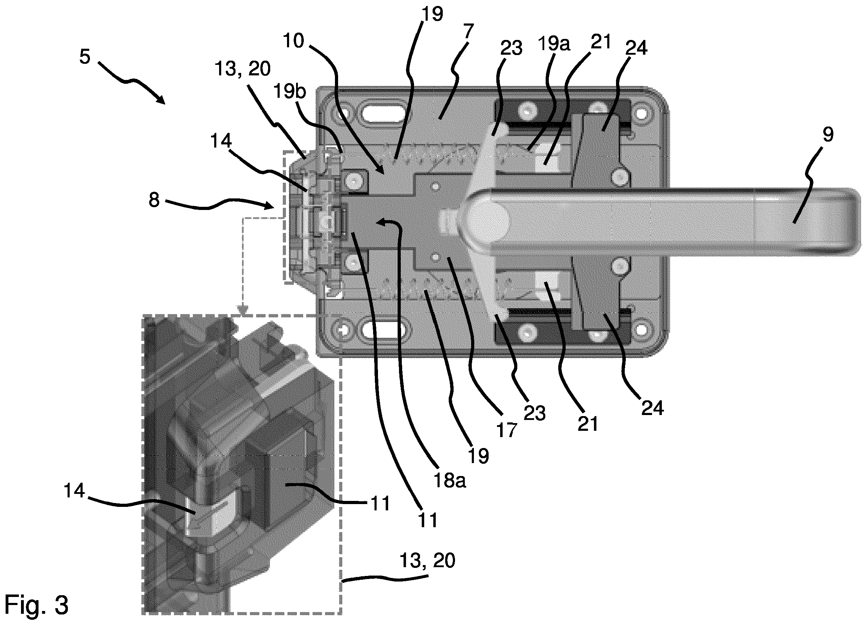

As can be seen, the door handle system 1 comprises two units. A bolt unit 5 and a lock unit 6. The bolt unit 5 comprises a housing 7 with a bolt opening 8, and a handle 9. The handle 9 is arranged at the housing 7. The bolt unit 5 comprises a bolt module 10 with a bolt 11. The bolt 11 is moveable respective to the housing 7. The bolt 11 can be moved out of the bolt opening 8 of the housing 7 for engaging with a corresponding lock opening 12 of the lock unit 6. The bolt unit 5 comprises a restraining device 13 with a bolt stopper 14 (see figure 3 for example). The bolt stopper 14 is configured to be switched between a blocking position in which it engages with the bolt 11 and a release position in which it releases the bolt 11 thereby allowing the bolt 11 to move out of the bolt opening 8.

In the blocking position, the bolt stopper 14 is configured to prevent the bolt 11 from moving out of the bolt opening 8. Preferably, the bolt stopper 14 only limits the movement of the bolt 11 in one direction, namely out of the bolt opening 8. The bolt 11 can still be able to move in the opposite direction, namely further into the housing 7 of the bolt unit 5.

The lock unit 6 comprises an activation means 15 and a lock housing 16. The bolt stopper 14 is configured to get in contact with the activation means 15 in a closed state of the safety door 2 thereby switching to the release position.

The lock housing 16 and the activation means 15 are preferably made of a single piece. However, the activation means 15 could also be attached to the lock housing 16, for example by a screwing connection or clipping connection.

The activation means 15 preferably protrudes from the lock housing 16.

The activation means 15 preferably comprises a protrusion configured to get into contact with the bolt stopper 14 if the safety door 2 is in a closed position, thereby displacing the bolt stopper 14 so that the bolt stopper 14 switches to the release position.

Within Figures 2A and 2B, the lock unit 6 is configured to be arranged stationary and the bolt unit 5 is configured to be arranged on the movable safety door 2. In general, the bolt unit 5 could also arranged stationary and the lock unit 6 could be arranged on the movable safety door 2.

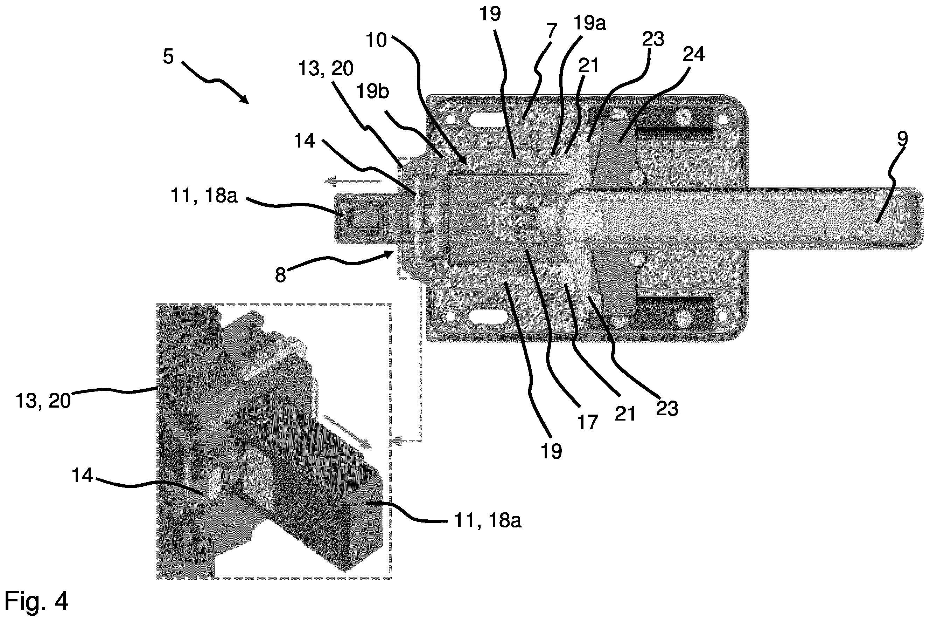

Figures 3 and 4 show a detailed view on the bolt unit 5, wherein one half of the housing 7 is opened so that the internal of the housing 7 is visible. In addition, the restraining device 13 is shown in detail.

Figure 3 shows the bolt stopper 14 in the blocking position and figure 4 shows the bolt stopper 14 in the release position.

The bolt module 10 comprises a body portion 17, wherein the bolt 11 forms a first end 18a of the body portion 17 and wherein the bolt unit 5 comprises a spring 19. The spring 19 is configured to apply a force on the body portion 17 in the direction of the bolt opening 8 of the housing 7. If the bolt stopper 14 is in the release position, the force of the spring 19 would push the bolt 11 out of the bolt opening 8 of the housing 7. Between the blocking position and the release position of the bolt stopper 14, the bolt module 10 moves relative to the housing 7 of the bolt unit 5 (inside that housing 7).

The restraining device 13 comprises a housing module 20 attached to the housing 7 of the bolt unit 5. In that case, the restraining device 13 is screwed to the housing 8 of the bolt unit 5 through its housing module 20. The bolt opening 8 is therefore part of the housing 7 as well as part of the housing module 20 of the restraining device 13. The restraining device 13 elongates the housing 7 of the bolt unit 5 in the direction of the moving bolt 11. The housing module 20 is stationary connected to the housing 7 of the bolt unit 5. Only the bolt stopper 14 is arranged moveably towards the housing 7 of the bolt unit 5. In addition, the bolt stopper 14 is also arranged moveably towards the housing module 20 of the restraining device 13.

Preferably, most parts of the bolt stopper 14 are covered by the housing module 20. In that case, only the part of the bolt stopper 14 that is supposed to get into contact with the activation means 15 is not covered by the housing module 20 of the restraining device 13.

A first end 19a of the spring 19 is attached at the body portion 17 of the bolt module 10. A second end 19b of the spring 19 is attached at the restraining device 13. The second end 19b of the spring 19 could also be attached at the housing 7 of the bolt unit 5 in a region of the bolt opening 8 or at the housing module 20 of the restraining device 13.

The body portion 17 of the bolt module 10 comprises a spring attachment 21. The spring 19 is attached with its first end 19a to the spring attachment 21 and therefore to the body portion 17. Preferably, the spring attachment 21 is arranged closer to a side wall of the housing 7 than the body portion 17, thereby providing some space to the spring 19. In this embodiment, the spring attachment 21 and the body portion 17 are separate elements which are preferably screwed together. However, the spring attachment 21 and the body portion 17 could also be formed by one element, wherein the spring attachment 21 is for example bent towards the side of the housing 7.

In the blocking position of the bolt stopper 14, the spring attachment 21 is preferably arranged further away from the bolt opening 8 than the axis of rotation of the handle 9.

In Figures 3 and 4, two springs 19 are used which are arranged in parallel. Between the two springs 19 the bolt 11 is moved. If the door handle system 1 is mounted, one spring 19 is arranged closer to the floor than the other spring 19. Using two springs 19 with the bolt 11 arranged in between, comes with the benefit that a force can be applied to the body portion 17 which is oriented parallel to the movement of the bolt, thereby avoiding that the bolt 11 might get misaligned or rubbing against the housing 7 or the housing module 20.

The bolt opening 8 extends through the housing 7 of the bolt unit 5 and through the housing module 20 of the restraining device 13. However, the housing module 20 of the restraining device 13 is optional, because the housing 7 of the bolt unit 5 could also serve as housing of the restraining device13.

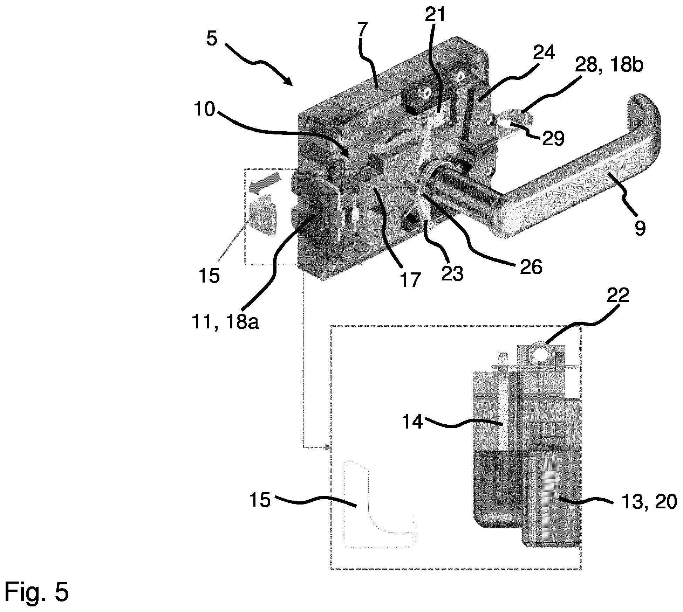

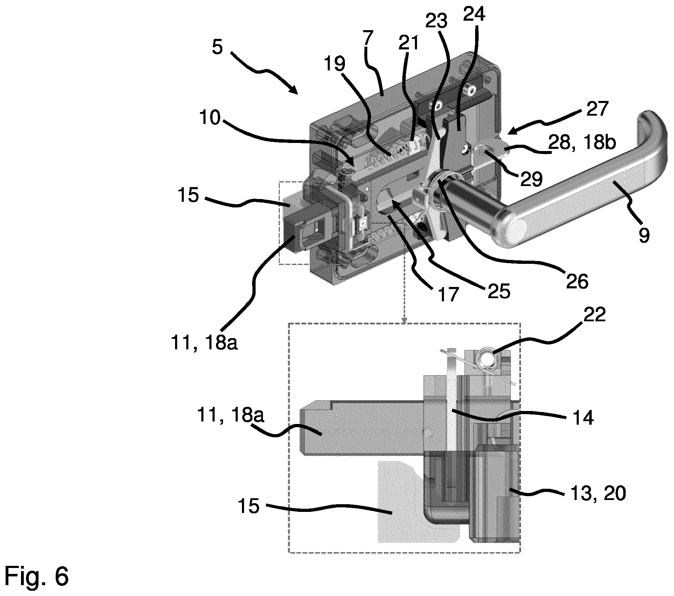

Figures 5 and 6 explain the restraining device 13 in more detail. Within figure 5 the bolt stopper 14 is in its blocking position, thereby limiting the movement of the bolt 11. Contrary to that, figure 6 shows the bolt stopper 15 in its release position, thereby allowing the bolt 11 to move out of the bolt opening 8.

Within figure 5, the bolt stopper 14 rests on a shoulder of the bolt 11. Therefore, the movement of the bolt 11 is restraint in one direction, namely out of the bolt opening 8. Of course, the bolt stopper 14 could also rest on the front side of the bolt 11.

In order to assure that the bolt stopper 14 can switch from the release position into the blocking position thereby engaging with the bolt 11, the restraining device 13 comprises a restraining spring 22. The restraining spring 22 is configured to apply a (constant) force onto the bolt stopper 14, thereby displacing the bolt stopper 14 in such a way that the bolt stopper 14 closes the bolt opening 8 at least partly if the bolt 11 is retracted into the housing 7 of the bolt unit 5. Therefore, a first end of the restraining spring 22 rests against the housing module 20 of the restraining device 13 or against the housing 7 of the bolt unit 5. A second end of the restraining spring 22 rests against the bolt stopper 14. The restraining spring 22 is preferably arranged within the housing module 20 or the housing 7.

The bolt stopper 14 is in form of a frame enclosing an opening, wherein the opening of the frame aligns with the bolt opening 8 of the housing 7 if the bolt stopper 14 is the release position, thereby allowing the bolt 11 to move through the opening of the frame and out of the bolt opening 8 of the housing 7. This position is shown in figure 6. However, if the bolt stopper 14 is displaced by the restraining spring 22, then the bolt stopper 14 is in the blocking position as shown in figure 5. If the bolt stopper 14 rests on a shoulder of the bolt 11, then the bolt 11 at least partly extends though the opening of the frame of the bolt stopper 14 both in the blocking position an in the release position. However, in the release position, also the shoulder of the bolt 11 can pass through the opening of the frame of the bolt stopper 14.

In order for the bolt stopper 14 to switch from the blocking position (figure 5) to the release position (figure 6), the activation means 15 comes into contact with the bolt stopper 14 thereby displacing the bolt stopper 14 against the force of the restraining spring 22, so that the opening of the frame of the bolt stopper 14 aligns with the bolt opening 8. Then the bolt 11, including its shoulder, passes through the opening of the frame of the bolt stopper 14.

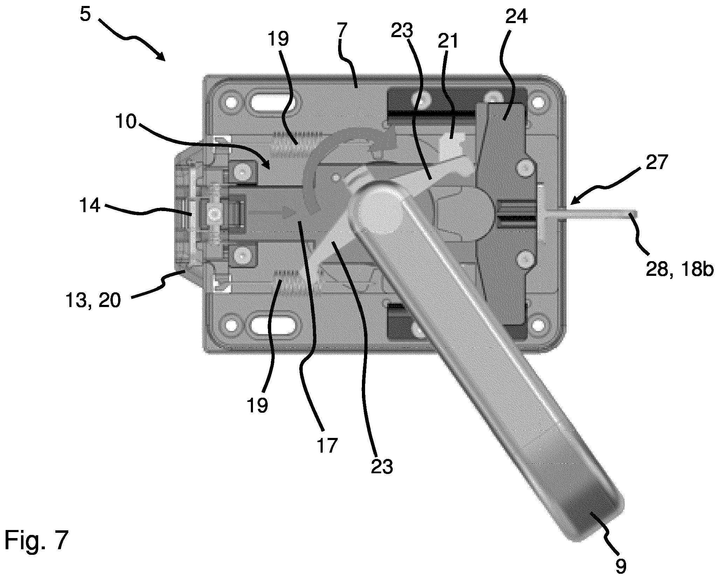

Figure 7 shows how the bolt stopper 14 is switched back from the release position to the blocking position. To do so, the bolt 11 needs to be retracted. This is achieved by pressing the handle 9. The handle 9 comprises at least one cam or finger 23 which is configured to get into contact with the bolt module 10 if the handle 9 is pressed. The cam or finger 23 therefore moves from a first position into a second position thereby moving the bolt module 10 away from the bolt opening 8 of the housing 7 so that the bolt 11 is retracted back into the bolt opening 8 of the housing 7. In other words, the handle 9 is a first (neutral) position if not pressed and in a second position if pressed. This allows the bolt stopper 14 to switch from the release position into the blocking position by the use of the restraining spring 22. The cam or finger 3 is fixedly attached to the handle 9. If the handle 9 is rotated by 90°, then the cam or finger 23 is also rotated by 90°. The bolt module 10 comprises contact means 24. The contact means 24 is connected (for example screwed) to the body portion 17 or is an integral part of the body portion. So, if the cam or finger 23 comes into contact with the contact means 24 upon pressing the handle 9 (upwards or downwards), then the contact means 24 and therefore the body portion 17 gets shifted which in turn results in the bolt 11 to be retracted into the bolt opening 8. The contact means 24 is preferably in a different layer compared to the spring attachment 21, so that the spring 19 is always arranged in a contact free manner with regard to the contact means. This means that the distance between the contact means 24 and the spring attachment 21 to the side wall of the housing 7 is different.

Within figure 7, the handle comprises two cams or fingers 23 which are spaced apart by approximately 180°. This allows the handle 9 to be pressed downwards as shown in figure 7 or to be pressed upwards in order to retract the bolt 11 and to open the safety door 2. If the handle 9 is pressed downwards, then the first cam or finger 23 comes into contact with the contact means 24. If the handle 9 is pressed upwards, then the second cam or finger 23 comes into contact with the contact means 24.

Preferably, the cam or finger 23 elongates for a certain length, wherein the contact area between the cam or finger 23 and the contact means 24 is at an end region of the cam or finger 23 and therefore spaced apart from the axis of rotation of the handle 9.

Upon pressing the handle 9, the handle 9 stays in place and is always arranged stationary with respect to the housing 7 of the bolt unit 5. However, the bolt module 10 moves with respect to the handle 9. For doing so, the body portion 17 preferably comprises a recess 25 (see figure 6). The recess 25 allows that the body portion 17 slides around a part of the handle 9.

Within figures 5 and 6, a return spring 26 is shown. The return spring 26 is attached to the handle 9 (for example through the cam or finger 23) and the housing 7 of the bolt unit 5. The return spring 26 is configured to move the handle 9 back from second position into the first position. The bolt module 10 stays in position, because the bolt stopper 14 engages with the bolt 11 (because of the restraining spring 22) after the bolt 11 was pulled back after pressing the handle 9.

Figures 5, 6, 7 and 8 also show that the housing 7 of the bolt unit 5 comprises a fastening opening 27 opposite to the bolt opening 8. The body portion 17 comprises a fastening part 28 forming a second end 18b of the body portion 17 opposite to the first end 18a. The fastening part 28 is configured to protrude out of the fastening opening 27 of the housing 7 if the bolt stopper 14 is in the blocking position. Contrary to that, the fastening part 28 is arranged within the housing 7 if the bolt stopper 14 is in the release position. The fastening part 28 is configured to engage with a fastening mean (not shown), like a U-Bolt lock, thereby limiting the movement of the bolt 11 respective to the housing 7 of the bolt unit 5. For doing so, the fastening part 28 comprises a fastening opening 29.

The fastening part 28 and the body portion 17 can be an integral part or made of separate pieces.

The bolt module 10 can comprise of one part which is a bent, pressed, punched and/or lasered part. If the bolt 11, the body portion 17, the spring attachment 21, the contact means 24 and the fastening part 28 are fully or in part separate elements which are for example screwed together, each of the parts can be bent, pressed, punched and/or lasered part. In that case, they are preferably made of metal or comprise metal. However, they could also be made of plastic. The cam or finger 23 could also be a bent, pressed, punched and/or lasered part. The cam or finger 23 is preferably made of metal or comprises metal.

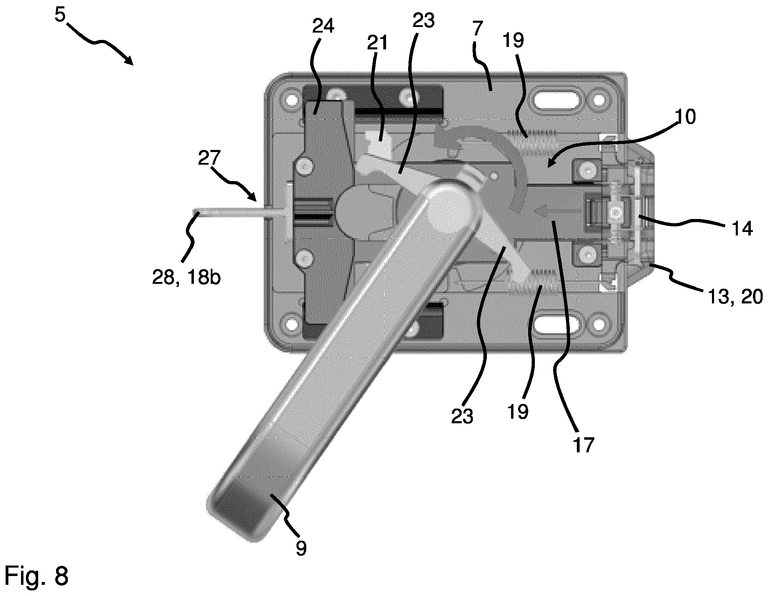

Figure 8 shows that the door handle system 1 can applied to both safety doors 2, namely to safety doors 2 that open to the left as well as to safety doors 2 that open to the right. For doing so, the handle 9 can for example mounted to the other side of the housing 7 of the bolt unit. Preferably and as shown in figures 7 and 8, the restraining device 13 can easily be mounted on the other end of the housing 7. In that case, the bolt opening 8 and the fastening opening 27 switch sides.

The present invention may, of course, be carried out in other ways than those specifically set forth herein without departing from essential characteristics of the invention, which is defined by the appended claims. The present embodiments are to be considered in all respects as illustrative and not restrictive, and all changes coming within the meaning and equivalency range of the appended claims are intended to be embraced therein.

**Reference signs**

| | |
|---|---|
| Door handle system | 1 |
| Safety door | 2 |
| Sliding door | 2a |
| Swing door | 2b |
| Cage | 3 |
| Sealed environment | 4 |
| Bolt unit | 5 |
| Lock unit | 6 |
| Housing (of bolt unit) | 7 |
| Bolt opening | 8 |
| Handle | 9 |
| Bolt module | 10 |
| Bolt | 11 |
| Lock opening | 12 |
| Restraining device | 13 |
| Bolt stopper | 14 |
| Activation means | 15 |
| Lock housing | 16 |
| Body portion | 17 |
| First end (body portion) | 18a |
| Second end (body portion) | 18b |
| Spring (bolt unit) | 19 |
| First end (spring) | 19a |
| Second end (spring) | 19b |
| Housing module | 20 |
| Spring attachment | 21 |
| Restraining spring | 22 |
| Finger | 23 |
| Contact means | 24 |
| Recess | 25 |
| Return spring | 26 |
| Fastening opening | 27 |
| Fastening part | 28 |
| Fastening opening | 29 |

## Claims

1. A door handle system (1) for a safety door (2), especially for a sliding door (2a) or swing door (2b), comprising the following features:
- a bolt unit (5) is provided, wherein the bolt unit (5) comprises a housing (7) with a bolt opening (8), and a handle (9), wherein the handle (9) is arranged at the housing (7);
- the bolt unit (5) comprises a bolt module (10) with a bolt (11);
- the bolt (11) is moveable respective to the housing (7), wherein the bolt (11) can be moved out of the bolt opening (8) of the housing (7) for engaging with a corresponding lock opening (12) of a lock unit (6);
- the bolt unit (5) comprises a restraining device (13) with a bolt stopper (14);
- the bolt stopper (14) is configured to be switched between a blocking position in which it engages with the bolt (11) and a release position in which it releases the bolt (11) thereby allowing the bolt (11) to move out of the bolt opening (8);
- an activation means (15) is provided, wherein the bolt stopper (14) is configured to get in contact with the activation means (15) in a closed state of the safety door (2) thereby switching to the release position;
- the bolt module (10) comprises a body portion (17), wherein the bolt (11) forms a first end (18a) of the body portion (17) and wherein the bolt unit (5) comprises a spring (19), wherein the spring (19) is configured to apply a force on the body portion (17) in the direction of the bolt opening (8) of the housing (7);
**characterized in that**
- the housing (7) of the bolt unit (5) comprises a fastening opening (27) opposite to the bolt opening (8), wherein the body portion (17) comprises a fastening part (28) forming a second end (18b) of the body portion (17) opposite to the first end (18a) and wherein the fastening part (28) is configured to protrude out of the fastening opening (27) of the housing (7) if the bolt stopper (14) is in the blocking position and wherein the fastening part (28) is arranged within the housing (7) if the bolt stopper (14) is in the release position and wherein the fastening part (28) is configured to engage with a fastening mean thereby limiting the movement of the bolt (11) respective to the housing (7).

2. The door handle system (1) according to claim 1, wherein
the bolt stopper (14) is configured to prevent the bolt (11) from moving out of the bolt opening (8) if the bolt stopper (14) is in the blocking position.

3. The door handle system (1) according to claim 1, wherein
the door handle system (1) comprises a lock unit (6), wherein the lock unit (6) comprises a lock housing (16) with the lock opening (12) and wherein the lock unit (6) comprises the activation means (15).

4. The door handle system (1) according to claim 3, wherein
a) the lock unit (6) is configured to be arranged stationary and the bolt unit (5) is configured to be arranged on the movable safety door (2); or
b) the bolt unit (5) is configured to be arranged stationary and the lock unit (6) is configured to be arranged on the movable safety door (2).

5. The door handle system (1) according to claim 3 or 4, wherein
the lock housing (16) and the activation means (15) are made of a single piece.

6. The door handle system (1) according to any of the preceding claims, wherein the activation means comprises a protrusion configured to get into contact with the bolt stopper if the safety door is in a closed position, thereby displacing the bolt stopper so that the bolt stopper switches to the release position.

7. The door handle system (1) according to any of the preceding claims, wherein the bolt stopper (14) is a frame surrounding an opening, wherein the opening of the frame aligns with the bolt opening (8) of the housing (7) if the bolt stopper (14) is the release position, thereby allowing the bolt (11) to move through the opening of the frame and out of the bolt opening (8) of the housing (7).

8. The door handle system (1) according to any of the preceding claims, wherein the bolt stopper (14) rests on the front side of the bolt (11) or on a shoulder of the bolt (11) if the bolt stopper (14) is in the blocking position.

9. The door handle system (1) according to any of the preceding claims, wherein the restraining device (13) comprises a restraining spring (22), wherein the restraining spring (22) is configured to engage with the bolt stopper (14) in such a way that:
a) the bolt stopper (14) rests in the blocking position until it gets in contact with the activation means (15); and
b) the bolt stopper (14) switches from the release position into the blocking position after the bolt (11) is retracted back into the bolt opening (8) of the housing (7) of the bolt unit (5) and especially behind the bolt stopper (14).

10. The door handle system (1) according to any of the preceding claims, wherein a first end (19a) of the spring (19) is attached at the body portion (17) of the bolt module (10) and wherein a second end (19b) of the spring (19) is attached at the housing (7) of the bolt unit (5) in a region of the bolt opening (8) or at the restraining device (13), wherein the spring (19) is configured to pull the body portion (17) of the bolt module (10) towards the bolt opening (8) of the housing (7).

11. The door handle system (1) according to any of the preceding claims, wherein the housing (7) of the bolt unit (5) comprises a second opening which is arranged opposite to the bolt opening (8), wherein the bolt module (10) is arrangeable within the housing (7) such that the bolt (11) can be moved out of the second opening instead of the bolt opening (8) which allows the door handle system (1) to be applied to a safety door (2) that opens to the right as well as to a safety door (2) that opens to the left.

12. The door handle system (1) according to any of the preceding claims, wherein the handle (9) comprises at least one cam or finger (23) which is configured to get into contact with the bolt module (10) if the handle (9) is pressed and therefore moves from a first position into a second position thereby moving the bolt module (10) away from the bolt opening (8) of the housing (7) so that the bolt (11) is moved back into the bolt opening (8) of the housing (7) so that the bolt stopper (14) is switchable from its release position into its blocking position.

13. The door handle system (1) according to claim 12, wherein a return spring (26) is provided and attached to the handle (9) and the housing (7) and wherein the return spring (26) is configured to move the handle (9) back from second position into the first position.

14. The door handle system (1) according to claim 13, wherein the return spring (26) is only arranged within the housing (7) of the bolt unit (5) and therefore invisible from the outside of the housing (7).

## Patentansprüche

1. Türgriffsystem (1) für eine Sicherheitstür (2), insbesondere für eine Schiebetür (2a) oder Schwenktür (2b), mit folgenden Merkmalen:
- es ist eine Riegeleinheit (5) vorgesehen, wobei die Riegeleinheit (5) ein Gehäuse (7) mit einer Riegelöffnung (8) und einen Griff (9) umfasst, wobei der Griff (9) an dem Gehäuse (7) angeordnet ist;
- die Riegeleinheit (5) umfasst ein Riegelmodul (10) mit einem Riegel (11);
- der Riegel (11) ist in Bezug auf das Gehäuse (7) bewegbar, wobei der Riegel (11) aus der Riegelöffnung (8) des Gehäuses (7) heraus bewegt werden kann, um in eine korrespondierende Schlossöffnung (12) einer Schlosseinheit (6) einzugreifen;
- die Riegeleinheit (5) umfasst eine Rückhalteeinrichtung (13) mit einem Riegelanschlag (14);
- der Riegelanschlag (14) ist dazu eingerichtet, zwischen einer Sperrposition, in der er mit dem Riegel (11) in Eingriff steht, und einer Freigabeposition, in der er den Riegel (11) freigibt, umgeschaltet zu werden, wodurch dem Riegel (11) ermöglicht wird, sich aus der Riegelöffnung (8) heraus zu bewegen;
- es ist ein Aktivierungsmittel (15) vorgesehen, wobei der Riegelanschlag (14) dazu eingerichtet ist, in einem geschlossenen Zustand der Sicherheitstür (2) mit dem Aktivierungsmittel (15) in Kontakt zu gelangen, wodurch in die Freigabeposition umgeschaltet wird;
- das Riegelmodul (10) weist einen Körperabschnitt (17) auf, wobei der Riegel (11) ein erstes Ende (18a) des Körperabschnitts (17) bildet und wobei die Riegeleinheit (5) eine Feder (19) umfasst, wobei die Feder (19) dazu eingerichtet ist, eine Kraft auf den Körperabschnitt (17) in Richtung der Riegelöffnung (8) des Gehäuses (7) auszuüben;
**dadurch gekennzeichnet, dass**
- das Gehäuse (7) der Riegeleinheit (5) eine Befestigungsöffnung (27) gegenüber der Riegelöffnung (8) umfasst, wobei der Körperabschnitt (17) ein Befestigungsteil (28) umfasst, das ein zweites Ende (18b) des Körperabschnitts (17) gegenüber dem ersten Ende (18a) bildet, und wobei das Befestigungsteil (28) dazu eingerichtet ist, aus der Befestigungsöffnung (27) des Gehäuses (7) herauszuragen, wenn sich der Riegelanschlag (14) in der Sperrposition befindet, und wobei das Befestigungsteil (28) innerhalb des Gehäuses (7) angeordnet ist, wenn sich der Riegelanschlag (14) in der Freigabeposition befindet, und wobei das Befestigungsteil (28) dazu eingerichtet ist, mit einem Befestigungsmittel in Eingriff zu gelangen, wodurch die Bewegung des Riegels (11) relativ zu dem Gehäuse (7) begrenzt wird.

2. Türgriffsystem (1) nach Anspruch 1, wobei der Riegelanschlag (14) dazu eingerichtet ist, zu verhindern, dass sich der Riegel (11) aus der Riegelöffnung (8) heraus bewegt, wenn sich der Riegelanschlag (14) in der Sperrposition befindet.

3. Türgriffsystem (1) nach Anspruch 1, wobei das Türgriffsystem (1) eine Schlosseinheit (6) umfasst, wobei die Schlosseinheit (6) ein Schlossgehäuse (16) mit der Schlossöffnung (12) umfasst, und wobei die Schlosseinheit (6) das Aktivierungsmittel (15) umfasst.

4. Türgriffsystem (1) nach Anspruch 3, wobei
a) die Schlosseinheit (6) dazu eingerichtet ist, ortsfest angeordnet zu sein, und die Riegeleinheit (5) dazu eingerichtet ist, an der beweglichen Sicherheitstür (2) angeordnet zu sein;
oder
b) die Riegeleinheit (5) dazu eingerichtet ist, ortsfest angeordnet zu sein, und die Schlosseinheit (6) dazu eingerichtet ist, an der beweglichen Sicherheitstür (2) angeordnet zu sein.

5. Türgriffsystem (1) nach Anspruch 3 oder 4, wobei
das Schlossgehäuse (16) und das Aktivierungsmittel (15) aus einem einzigen Stück hergestellt sind.

6. Türgriffsystem (1) nach einem der vorhergehenden Ansprüche, wobei
das Aktivierungsmittel einen Vorsprung aufweist, der dazu eingerichtet ist, mit dem Riegelanschlag in Kontakt zu gelangen, wenn sich die Sicherheitstür in einer geschlossenen Position befindet, wodurch der Riegelanschlag verlagert wird, so dass der Riegelanschlag in die Freigabeposition umgeschaltet wird.

7. Türgriffsystem (1) nach einem der vorhergehenden Ansprüche, wobei
der Riegelanschlag (14) ein Rahmen ist, der eine Öffnung umgibt, wobei die Öffnung des Rahmens mit der Riegelöffnung (8) des Gehäuses (7) fluchtet, wenn sich der Riegelanschlag (14) in der Freigabeposition befindet, wodurch dem Riegel (11) ermöglicht wird, sich durch die Öffnung des Rahmens und aus der Riegelöffnung (8) des Gehäuses (7) heraus zu bewegen.

8. Türgriffsystem (1) nach einem der vorhergehenden Ansprüche, wobei
der Riegelanschlag (14) auf der Vorderseite des Riegels (11) oder auf einer Schulter des Riegels (11) aufliegt, wenn sich der Riegelanschlag (14) in der Sperrposition befindet.

9. Türgriffsystem (1) nach einem der vorhergehenden Ansprüche, wobei
die Rückhalteeinrichtung (13) eine Rückhaltefeder (22) umfasst, wobei die Rückhaltefeder (22) dazu eingerichtet ist, mit dem Riegelanschlag (14) derart in Eingriff zu gelangen, dass:
a) der Riegelanschlag (14) in der Sperrposition ruht, bis er mit dem Aktivierungsmittel (15) in Kontakt gelangt; und
b) der Riegelanschlag (14) von der Freigabeposition in die Sperrposition umschaltet, nachdem der Riegel (11) zurück in die Riegelöffnung (8) des Gehäuses (7) der Riegeleinheit (5) und insbesondere hinter den Riegelanschlag (14) zurückgezogen ist.

10. Türgriffsystem (1) nach einem der vorhergehenden Ansprüche, wobei ein erstes Ende (19a) der Feder (19) an dem Körperabschnitt (17) des Riegelmoduls (10) angebracht ist, und wobei ein zweites Ende (19b) der Feder (19) an dem Gehäuse (7) der Riegeleinheit (5) in einem Bereich der Riegelöffnung (8) oder an der Rückhalteeinrichtung (13) angebracht ist, wobei die Feder (19) dazu eingerichtet ist, den Körperabschnitt (17) des Riegelmoduls (10) in Richtung der Riegelöffnung (8) des Gehäuses (7) zu ziehen.

11. Türgriffsystem (1) nach einem der vorhergehenden Ansprüche, wobei das Gehäuse (7) der Riegeleinheit (5) eine zweite Öffnung umfasst, die der Riegelöffnung (8) gegenüberliegend angeordnet ist, wobei das Riegelmodul (10) derart innerhalb des Gehäuses (7) anordenbar ist, dass der Riegel (11) anstelle aus der Riegelöffnung (8) aus der zweiten Öffnung bewegt werden kann, wodurch das Türgriffsystem (1) sowohl an einer sich nach rechts öffnenden Sicherheitstür (2) als auch an einer sich nach links öffnenden Sicherheitstür (2) angewendet werden kann.

12. Türgriffsystem (1) nach einem der vorhergehenden Ansprüche, wobei der Griff (9) mindestens einen Nocken oder Finger (23) aufweist, der dazu eingerichtet ist, mit dem Riegelmodul (10) in Kontakt zu gelangen, wenn der Griff (9) gedrückt wird, und sich daher von einer ersten Position in eine zweite Position bewegt, wodurch das Riegelmodul (10) von der Riegelöffnung (8) des Gehäuses (7) weg bewegt wird, so dass der Riegel (11) zurück in die Riegelöffnung (8) des Gehäuses (7) bewegt wird, so dass der Riegelanschlag (14) von seiner Freigabeposition in seine Sperrposition umschaltbar ist.

13. Türgriffsystem (1) nach Anspruch 12, wobei eine Rückstellfeder (26) vorgesehen und an dem Griff (9) und dem Gehäuse (7) angebracht ist, und wobei die Rückstellfeder (26) dazu eingerichtet ist, den Griff (9) von der zweiten Position zurück in die erste Position zu bewegen.

14. Türgriffsystem (1) nach Anspruch 13, wobei die Rückstellfeder (26) nur innerhalb des Gehäuses (7) der Riegeleinheit (5) angeordnet ist und daher von außerhalb des Gehäuses (7) unsichtbar ist.

## Revendications

1. Système de poignée de porte (1) pour une porte de sécurité (2), en particulier pour une porte coulissante (2a) ou une porte battante (2b), comprenant les caractéristiques suivantes :
- une unité de pêne (5) est prévue, dans lequel l'unité de pêne (5) comprend un boîtier (7) avec une ouverture de pêne (8) et une poignée (9), dans lequel la poignée (9) est disposée sur le boîtier (7) ;
- l'unité de pêne (5) comprend un module de pêne (10) avec un pêne (11) ;
- le pêne (11) est mobile par rapport au boîtier (7), dans lequel le pêne (11) peut être déplacé hors de l'ouverture de pêne (8) du boîtier (7) pour s'engager dans une ouverture de serrure correspondante (12) d'une unité de serrure (6) ;
- l'unité de pêne (5) comprend un dispositif de retenue (13) avec un arrêt de pêne (14) ;
- l'arrêt de pêne (14) est configuré pour être commuté entre une position de blocage dans laquelle il s'engage avec le pêne (11) et une position de libération dans laquelle il libère le pêne (11), permettant ainsi au pêne (11) de sortir de l'ouverture de pêne (8) ;
- un moyen d'activation (15) est prévu, dans lequel l'arrêt de pêne (14) est configuré pour entrer en contact avec le moyen d'activation (15) dans un état fermé de la porte de sécurité (2), passant ainsi à la position de libération ;
- le module de pêne (10) comprend une partie corps (17), dans lequel le pêne (11) forme une première extrémité (18a) de la partie corps (17) et dans lequel l'unité de pêne (5) comprend un ressort (19), dans lequel le ressort (19) est configuré pour exercer une force sur la partie corps (17) dans la direction de l'ouverture de pêne (8) du boîtier (7) ;
**caractérisé en ce que**
- le boîtier (7) de l'unité de pêne (5) comprend une ouverture de fixation (27) opposée à l'ouverture de pêne (8), dans lequel la partie corps (17) comprend une partie de fixation (28) formant une deuxième extrémité (18b) de la partie corps (17) opposée à la première extrémité (18a) et dans lequel la partie de fixation (28) est configurée pour faire saillie hors de l'ouverture de fixation (27) du boîtier (7) si l'arrêt de pêne (14) est dans la position de blocage et dans lequel la partie de fixation (28) est disposée à l'intérieur du boîtier (7) lorsque l'arrêt de pêne (14) est dans la position de libération, et dans lequel la partie de fixation (28) est configurée pour s'engager avec un moyen de fixation, limitant ainsi le mouvement du pêne (11) par rapport au boîtier (7).

2. Système de poignée de porte (1) selon la revendication 1, dans lequel
l'arrêt de pêne (14) est configuré pour empêcher le pêne (11) de sortir de l'ouverture de pêne (8) lorsque l'arrêt de pêne (14) est dans la position de blocage.

3. Système de poignée de porte (1) selon la revendication 1, dans lequel
le système de poignée de porte (1) comprend une unité de serrure (6), dans lequel l'unité de serrure (6) comprend un boîtier de serrure (16) avec l'ouverture de serrure (12) et dans lequel l'unité de serrure (6) comprend le moyen d'activation (15).

4. Système de poignée de porte (1) selon la revendication 3, dans lequel
a) l'unité de serrure (6) est configurée pour être disposée de manière fixe et l'unité de pêne (5) est configurée pour être disposée sur la porte de sécurité mobile (2) ; ou
b) l'unité de pêne (5) est configurée pour être disposée de manière fixe et l'unité de serrure (6) est configurée pour être disposée sur la porte de sécurité mobile (2).

5. Système de poignée de porte (1) selon la revendication 3 ou 4, dans lequel
le boîtier de serrure (16) et le moyen d'activation (15) sont réalisés d'une seule pièce.

6. Système de poignée de porte (1) selon l'une quelconque des revendications précédentes, dans lequel le moyen d'activation comprend une saillie configurée pour entrer en contact avec l'arrêt de pêne si la porte de sécurité est en position fermée, déplaçant ainsi l'arrêt de pêne de manière à ce que celui-ci passe en position de libération.

7. Système de poignée de porte (1) selon l'une quelconque des revendications précédentes, dans lequel l'arrêt de pêne (14) est un cadre entourant une ouverture, dans lequel l'ouverture du cadre s'aligne avec l'ouverture de pêne (8) du boîtier (7) si l'arrêt de pêne (14) est dans la position de libération, permettant ainsi au pêne (11) de se déplacer à travers l'ouverture du cadre et hors de l'ouverture de pêne (8) du boîtier (7).

8. Système de poignée de porte (1) selon l'une quelconque des revendications précédentes, dans lequel l'arrêt de pêne (14) repose sur la face avant du pêne (11) ou sur un épaulement du pêne (11) si l'arrêt de pêne (14) est dans la position de blocage.

9. Système de poignée de porte (1) selon l'une quelconque des revendications précédentes, dans lequel le dispositif de retenue (13) comprend un ressort de retenue (22), dans lequel le ressort de retenue (22) est configuré pour s'engager avec l'arrêt de pêne (14) de telle manière que :
a) l'arrêt de pêne (14) repose dans la position de blocage jusqu'à ce qu'il entre en contact avec le moyen d'activation (15) ; et
b) l'arrêt de pêne (14) passe de la position de libération à la position de blocage après que le pêne (11) s'est rétracté dans l'ouverture de pêne (8) du boîtier (7) de l'unité de pêne (5) et en particulier derrière l'arrêt de pêne (14).

10. Système de poignée de porte (1) selon l'une quelconque des revendications précédentes, dans lequel une première extrémité (19a) du ressort (19) est fixée à la partie corps (17) du module de pêne (10) et dans lequel une deuxième extrémité (19b) du ressort (19) est fixée au boîtier (7) de l'unité de pêne (5) dans une région de l'ouverture de pêne (8) ou au dispositif de retenue (13), dans lequel le ressort (19) est configuré pour tirer la partie corps (17) du module de pêne (10) vers l'ouverture de pêne (8) du boîtier (7).

11. Système de poignée de porte (1) selon l'une quelconque des revendications précédentes, dans lequel le boîtier (7) de l'unité de pêne (5) comprend une deuxième ouverture qui est disposée à l'opposé de l'ouverture de pêne (8), dans lequel le module de pêne (10) peut être disposé à l'intérieur du boîtier (7) de telle sorte que le pêne (11) peut être déplacé hors de la deuxième ouverture au lieu de l'ouverture de pêne (8), ce qui permet au système de poignée de porte (1) d'être appliqué à une porte de sécurité (2) qui s'ouvre vers la droite aussi bien qu'à une porte de sécurité (2) qui s'ouvre vers la gauche.

12. Système de poignée de porte (1) selon l'une quelconque des revendications précédentes, dans lequel la poignée (9) comprend au moins une came ou un doigt (23) qui est configuré pour entrer en contact avec le module de pêne (10) si la poignée (9) est pressée et se déplace ainsi d'une première position dans une deuxième position, éloignant ainsi le module de pêne (10) de l'ouverture de pêne (8) du boîtier (7) de sorte que le pêne (11) est ramené dans l'ouverture de pêne (8) du boîtier (7) afin que l'arrêt de pêne (14) puisse être passé de sa position de libération à sa position de blocage.

13. Système de poignée de porte (1) selon la revendication 12, dans lequel un ressort de rappel (26) est prévu et fixé à la poignée (9) et au boîtier (7) et dans lequel le ressort de rappel (26) est configuré pour ramener la poignée (9) de la deuxième position dans la première position.

14. Système de poignée de porte (1) selon la revendication 13, dans lequel le ressort de rappel (26) est disposé uniquement à l'intérieur du boîtier (7) de l'unité de pêne (5) et est donc invisible depuis l'extérieur du boîtier (7).
